# EUROPEAN PATENT APPLICATION

(11) **EP 1 898 528 A1**
(43) Date of publication of application: **12.03.2008**
(21) Application number: 06756467.4
(22) Date of filing: 23.05.2006
(51) Int. Cl.: H04B 1/10, H04B 1/26

(54) **BROADCAST RECEIVING APPARATUS AND FILTER CONTROL METHOD**

(30) Priority: 30.06.2005 JP 2005192343
(71) Applicant: Pioneer Corporation, Tokyo 153-8654 (JP)
(72) Inventor: TAKAHASHI, Kazuhiko, c/o Pioneer Corporation, Kawagoe-shi, Saitama 350-8555 (JP); KOBAYASHI, Terukazu, c/o Pioneer Corporation, Kawagoe-shi, Saitama 350-8555 (JP)
(74) Representative: HOFFMANN EITLE
(86) International application number: PCT/JP2006/310211
(87) International publication number: WO 2007/004365

(57) **Abstract**

To make it possible to reduce an uncomfortable feeling in terms of auditory sense when controlling a band-pass filter in accordance with a reception level of an adjacent interference-signal. When shifting demodulation processing performed by an audio-signal demodulating unit from monaural reproduction to wideband stereo reproduction based on a control signal output from a comparing control unit 14, the filtering band of an IF filter 4 is controlled to perform intermediately narrowband stereo reproduction processing based on a filter output from a band-pass filter of a middle bandwidth that has a middleband between a narrowband filter and a wideband filter. The comparing control unit 14 operates either a multipass reduction circuit 7 or a separation circuit 15 when selecting the band-pass filter of the middle bandwidth.

## Description

### TECHNICAL FIELD

The present invention relates a broadcast receiver and a filter control method applicable to the broadcast receiver.

### BACKGROUND ART

When a receiver for broadcasts that receives radio broadcasting or television broadcasting receives a signal at a desired frequency (hereinafter, referred to as "desired wave signal"), if there is a broadcast station that is using a frequency adjacent to the desired wave signal, a receiving quality is degraded by being influenced by a signal at the adjacent frequency. For this reason, according to a general receiver for broadcast, if a signal that influences the desired wave signal (hereinafter, referred to as "interference wave signal") is detected, for example, because the interference wave signal is adjacent to the desired wave signal, control of switching between wide and narrow bandwidths of filters or stereo and monaural modes is performed.

As a document that discloses the above technology, for example, the following Patent Document 1 discloses an FM radio receiver (method). According to the document, to delete a popping noise caused by switching to a bandwidth fixed mode or a breaking noise caused by an adjacent station while the bandwidth is fixed, the FM radio receiver is configured to activate a mute circuit when fixing the bandwidth.

Specifically, according to the FM radio receiver described in Patent Document 1, switching control of a middle frequency bandwidth is performed based on a received adjacent interference level, a bandwidth and stereo-monaural switching control circuit monitors whether an adjacent interference exceeds a control limit level. When the adjacent interference exceeds the level, the bandwidth is fixed to a certain range, a mute circuit is activated, and audio output is shut off; and then when the adjacent interference falls within the control limit level, bandwidth control is resumed, mute operation is canceled, and audio is output.

Patent Document 1: Japanese Patent Application Laid-open No. H5-3441

### DISCLOSURE OF INVENTION

### PROBLEM TO BE SOLVED BY THE INVENTION

However, the FM radio receiver described in Patent Document 1 has a problem that there is an uncomfortable feeling in terms of auditory sense, when the adjacent interference exceeds the control limit level, or when the adjacent interference falls within the control limit level, because the mute circuit is operated in the both conditions.

Furthermore, there is another problem that a uncomfortable feeling in terms of auditory sense is relatively large caused by instant switching between monaural demodulation and stereo demodulation in demodulation processing of an audio signal, when switching between a narrowband and a wideband of the band-pass filter.

The present invention is made to solve the above problems as an example, and an object of the present invention is to provide a broadcast receiver and a filter control method that manage reduction in an uncomfortable feeling in terms of auditory sense when controlling a band-pass filter in accordance with a reception level of an adjacent interference-signal.

### MEANS FOR SOLVING PROBLEM

A broadcast receiver according to claim 1 of the present invention includes a front end unit that converts a reception signal containing a desired wave signal that is a signal from a desired broadcast station into a signal at a predetermined frequency bandwidth; an interference-signal control unit that includes an interference-signal characteristic extracting unit that extracts signal characteristics of the desired wave signal and an interference signal present adjacent to the desired wave signal based on an output signal from the front end unit, and a comparing control unit that creates and outputs an appropriate control signal based on the signal characteristics extracted by the interference-signal characteristic extracting unit; a filter unit that filters the output signal from the front end unit with an appropriate band-pass filter, and outputs filtered signal; a wave detector that creates a baseband signal from output from the filter unit, and outputs the baseband signal; and an audio-signal demodulating unit that includes a multipass reduction circuit that reduces a noise component in an audio signal included in the baseband signal, the noise component being caused by a multipass component in the desired wave signal, and an automatic reception control circuit that controls demodulation processing of an audio signal included in a reception signal in accordance with a reception condition of the reception signal. When shifting filtering processing performed by the filter from a narrowband filter to a wideband filter based on a control signal output from the comparing control unit, a filtering band of the filter unit is set to perform intermediately narrowband stereo reproduction processing based on a filter output from a band-pass filter of a middle bandwidth that has a middleband between the narrowband filter and the wideband filter.

Furthermore, A filter control method according to claim 4 of the present invention is applicable to a broadcast receiver that demodulates and reproduces a filter output filtered by a certain band-pass filter from a reception signal containing a desired wave signal that is a signal from a desired broadcast station. The filter control method includes a middleband filter selecting step of selecting a band-pass filter of a middle bandwidth that has a middleband between a band-pass filter of a narrow bandwidth and a band-pass filter of a wide bandwidth as a filtering band of the certain band-pass filter. The middleband filter selecting step is intermediately performed when reproduction of an audio signal is shifted from narrowband monaural reproduction to wideband stereo reproduction.

### BRIEF DESCRIPTION OF DRAWINGS

[Fig. 1] Fig. 1 is a block diagram illustrating a configuration of a broadcast receiver according to an embodiment of the present invention.
[Fig. 2] Fig. 2 is a flowchart that presents a selecting flow for a filter characteristic of an IF filter to be selected in accordance with a control signal (when shifting from a narrowband filter to a wideband filter).
[Fig. 3] Fig. 3 is a flowchart that presents a selecting flow for a filter characteristic of the IF filter to be selected in accordance with a control signal (when shifting from a wideband filter to a narrowband filter).

### EXPLANATIONS OF LETTERS OR NUMERALS

- 1: Receiving antenna
- 2: Front end unit
- 3: IF signal
- 4: IF filter
- 5: Wave detector
- 6: Audio-signal demodulating unit
- 7: Multipass reduction circuit
- 8: Automatic reception control circuit
- 10: Interference-signal control unit
- 11: Interference-signal characteristic extracting unit
- 12: Adjacent-wave extracting BPF
- 13: Rectifying circuit
- 14: Comparing control unit
- 15: Separation circuit
- 16: Soft-mute circuit
- 17: High-cut circuit
- 20, 21, 22: Control signal

### BEST MODE(S) FOR CARRYING OUT THE INVENTION

Best modes for carrying out the present invention are explained below. A broadcast receiver according to an embodiment of the present invention includes a front end unit, an interference-signal control unit, an IF filter unit, a wave detector, and an audio-signal demodulating unit. The interference-signal control unit includes an interference-signal characteristic extracting unit, and a comparing control unit. The audio-signal demodulating unit includes a multipass reduction circuit, and an automatic reception control circuit.

More specifically, the front end unit converts a reception signal containing a desired wave signal that is a signal from a desired broadcast station into a signal in a predetermined frequency bandwidth (for example, an IF signal). The interference-signal characteristic extracting unit included in the interference-signal control unit extracts signal characteristics of the desired wave signal and an interference signal present adjacent to the desired wave signal based on the signal in the predetermined frequency bandwidth. The comparing control unit included in the interference-signal control unit creates and outputs an appropriate control signal based on the signal characteristics extracted by the interference-signal characteristic extracting unit. The filter unit (for example, an IF filter) filters the output signal from the front end unit with an appropriate band-pass filter, and outputs the filtered signal. The wave detector creates a baseband signal from the output signal from the front end unit, and outputs the baseband signal. The multipass reduction circuit included in the audio-signal demodulating unit reduces a noise component in an audio signal included in the baseband signal, the noise component being caused by a multipass component in the desired wave signal. The automatic reception control circuit included in the audio-signal demodulating unit controls demodulation processing of an audio signal included in a reception signal in accordance with a reception condition of the reception signal.

According to the broadcast receiver configured as described above, when shifting from narrowband monaural reproduction to wideband stereo reproduction based on the control signal output from the comparing control unit, the broadcast receiver is configured to set the filtering band of the filter unit intermediately to perform narrowband stereo reproduction processing based on a filter output from a band-pass filter of a middle bandwidth that has a middleband between a narrowband filter and a wideband filter. This can reduce an uncomfortable feeling in terms of auditory sense caused by instant switching between monaural demodulation and stereo demodulation in demodulation processing of an audio signal (particularly, when switching from monaural demodulation to stereo demodulation).

Moreover, according to another embodiment of the broadcast receiver according to the present invention, when the automatic reception control circuit includes a separation circuit that continuously switches between stereo reproduction and monaural reproduction based on the reception level, the comparing control unit can operate either the multipass reduction circuit or the separation circuit when selecting the band-pass filter of the middle bandwidth. By using the filter control of selecting the band-pass filter of the middle bandwidth in parallel with the demodulation processing control to operate either the multipass reduction circuit or the separation circuit, distortion of a desired wave signal and interference noise both of which may occur when switching the band can be reduced compatibly with reduction in an uncomfortable feeling in terms of auditory sense arising from switching.

It is preferable that the band of the band-pass filter of the middle bandwidth is set within a range plus or minus 20% of the mid value between the band of the band-pass filter of the wide bandwidth for performing wideband stereo reproduction and the upper limit band of the band-pass filter for performing monaural reproduction. If the band is set within such range, variations of average percent modulation in broadcast signals in these days can be satisfactorily coped.

It is preferable that the time for routing through the band-pass filter of the middle bandwidth is set within a range from hundreds milliseconds to a few seconds. If the time is set to such value, a sudden change in switching can be avoided, an uncomfortable feeling in terms of auditory sense can be reduced, and a shift to a wideband stereo reproduction can be smoothly performed.

According to an embodiment of a control method for the broadcast receiver according to the present invention, that is, a filter control method applicable to a broadcast receiver that demodulates and reproduces a filter output filtered by a certain band-pass filter from a reception signal containing a desired wave signal that is a signal from a desired broadcast station, it is possible to perform processing via a middleband filter selecting step of selecting a band-pass filter of a middle bandwidth that has a middleband between a band-pass filter of the narrow bandwidth and a band-pass filter of the wide bandwidth as the filtering band of the band-pass filter when shifting reproduction of an audio signal from narrowband monaural reproduction to wideband stereo reproduction. Particularly, if a signal mode (format) of an input signal is digital, the input signal can be easily applied by using an arbitrary signal processing unit or an arbitrary information processing unit, so that easiness of designing can be secured.

### Embodiment

An embodiment of the present invention is explained below with reference to the drawings.

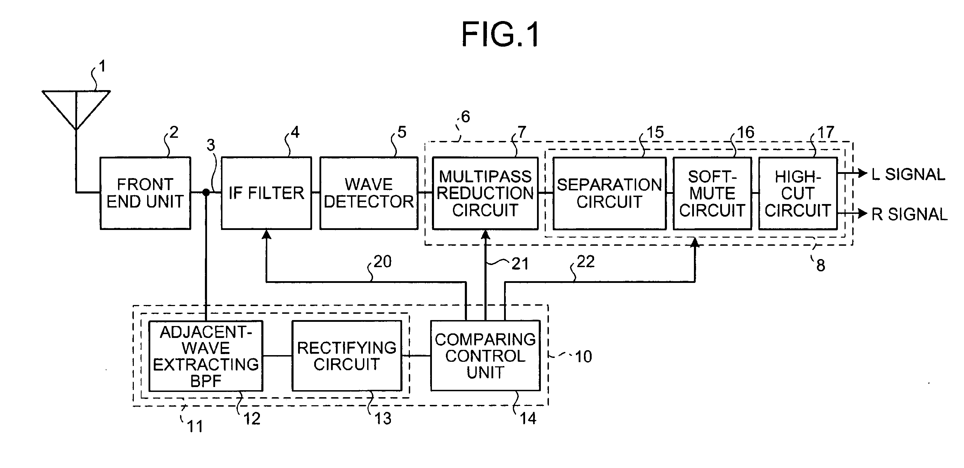

First of all, an embodiment of a broadcast receiver according to the present invention is explained below. Fig. 1 is a block diagram that depicts a configuration of the broadcast receiver according to the embodiment of the present invention.

### [Configuration of the receiver]

The broadcast receiver shown in Fig. 1 is configured to include a receiving antenna 1 , a front end unit 2, an IF filter 4, a wave detector 5, an audio-signal demodulating unit 6, and an interference-signal control unit 10. The audio-signal demodulating unit 6 includes a multipass reduction circuit 7, and an automatic reception control circuit 8. Likewise, the interference-signal control unit 10 includes an interference-signal characteristic extracting unit 11 and a comparing control unit 14, the interference-signal characteristic extracting unit 11 includes an adjacent-wave extracting band-pass filter (BPF) 12 and a rectifying circuit 13, and the automatic reception control circuit 8 includes a separation circuit 15, a soft-mute circuit 16, and a high-cut circuit 17.

### [Operation of the receiver]

An operation of the broadcast receiver shown in Fig. 1 is explained below. As shown in the figure, the front end unit 2 selects a signal, for example, a signal from a desired broadcast station, from among reception signals received via the receiving antenna 1, and outputs an IF signal 3 created by performing processing, such as amplification and frequency conversion, on the selected signal. A band-pass filter having a certain filter characteristic is selected in the IF filter 4 in accordance with a control signal 20 output from the comparing control unit 14, and the band-pass filter selected for the IF signal 3 performs a filtering process. The IF filter 4 includes band-pass filters each of which has a fixed bandwidth, for example, 180 kHz, 90 kHz, or 50 kHz.

The adjacent-wave extracting BPF 12 extracts an interference signal component that contains an adjacent interference signal or a multipass wave from the IF signal 3 that is input, and outputs the interference signal component to the rectifying circuit 13. The rectifying circuit 13 can obtain a rectified output in accordance with the level of the interference signal component output from the adj acent-wave extracting BPF 12. The comparing control unit 14 compares the rectified output output from the rectifying circuit 13 with a threshold, and outputs the control signal 20 described above based on a comparison result of magnitude. In addition to the control signal 20, the comparing control unit 14 outputs a control signal 21 to the multipass reduction circuit 7, and outputs a control signal 22 to the automatic reception control circuit 8.

The wave detector 5 creates signals in a baseband from output from the IF filter 4, and outputs the signals to the multipass reduction circuit 7. As baseband signals output from the wave detector 5, for example, a FM receiver outputs a left channel signal (hereinafter, referred to as "L signal") and a right channel signal (hereinafter, referred to as "R signal") of a stereo demodulation signal, an L+R signal that is a sum signal of them, and a L-R signal that is a subtracted signal of them.

The multipass reduction circuit 7 is a circuit for reducing a noise component caused by a multipass component when multipass interference occurs. Because a noise caused by multipass interference turns noticeable particularly during stereo demodulation, it is effective to operate during a stereo reproduction.

Radio waves used for FM broadcasting and television broadcasting have substantial rectilinear propagation, so that fluctuations in the electric field are large due to influences of a land form and a building, a distance from a transmitting station, and the like. Therefore, an automatic receiving-control (ARC) function that can change the receiving mode in accordance with a variation in radio wave conditions is favorable for the broadcast receiver. The automatic reception control circuit 8 shown in Fig. 1 includes such favorable functions. Specifically, the separation circuit 15 performs primary hi-fi (wideband stereo) reception at a predetermined reception level or higher, and continuously switches the reproduction sound from stereo reproduction to monaural reproduction as the reception level decreases. The high-cut circuit 17 performs processing of reducing a wideband noise. The soft-mute circuit 16 performs reduction processing for audio output. As a result, the automatic reception control circuit 8 outputs a desired audio signal (stereo signal/monaural signal). The above processing performed by the automatic reception control circuit 8 is performed based on the control signal 22 output from the comparing control unit 14 similarly to the multipass reduction circuit 7.

### [Flow of selecting filter characteristic of the IF filter 4]

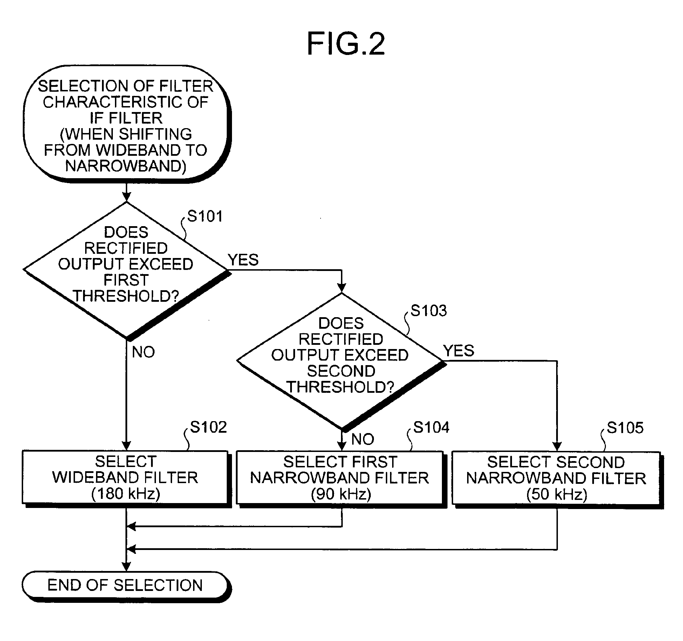

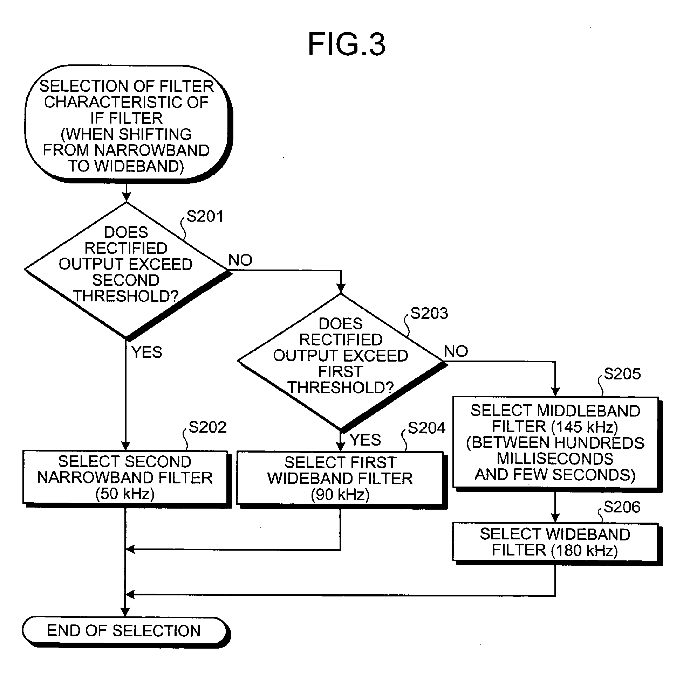

A selecting flow of selecting a filter characteristic of the IF filter 4 is explained below with reference to Figs. 1 to 3. Figs. 2 and 3 are flowcharts of a selecting flow for a filter characteristic of the IF filter 4 to be selected in accordance with the control signal 20. To explain more details, Fig. 2 is a flowchart of a selecting flow of selecting the filter characteristic of a narrower band than a currently selected filter characteristic when the filter characteristic of a wideband is currently selected. Contrary to Fig. 2, Fig. 3 is a flowchart of a selecting flow of selecting the filter characteristic of a wider band than a currently selected filter characteristic when the filter characteristic of a narrowband is currently selected. As an assumption for explanations, it is assumed that the IF filter 4 includes band-pass filters each of which has a fixed bandwidth as described below.

Namely, a wideband filter (180 kHz), a middleband filter (145 kHz), a first narrowband filter (90 kHz), and a second narrowband filter (50 kHz) are included. The wideband filter is to be applied during wideband stereo reproduction. The middleband filter is to be applied during narrowband stereo reproduction. The first narrowband filter is to be applied during monaural reproduction. The second narrowband filter is to be applied during monaural reproduction, and when the frequency of an interference signal is adjacent more closely to a desired wave signal, or the strength of an interference signal is higher than when using the first narrowband filter. The middleband filter (145 kHz) is an intermediate filter that is applied to remove an uncomfortable feeling in terms of auditory sense caused by an instant switching between monaural demodulation and stereo demodulation in demodulation processing of an audio signal, when switching the band-pass filters between the narrowband and the wideband. Moreover, the middleband filter (145 kHz) as the intermediate filter is a filter that is to be applied only when the first or second narrowband filter is currently selected, and the selected filter is shifted to the filter characteristic of the wideband, as described below.

At first, the flow shown in Fig. 2 is explained below. The comparing control unit 14 determines whether the rectified output exceeds a first threshold (step S101). If the rectified output does not exceed the first threshold (No at step S101), the wideband filter (180 kHz) is selected (step S102). On the other hand, if the rectified output exceeds the first threshold (Yes at step S101), it is further determined whether the rectified output exceeds a second threshold (step S103). If the rectified output does not exceed the second threshold (No at step S103), the first narrowband filter (90 kHz) is selected (step S104). If the rectified output exceeds the second threshold (Yes at step S103), the second narrowband filter (50 kHz) is selected (step S105), and then the processing of the filter selecting flow is terminated.

Subsequently, the flow shown in Fig. 3 is explained below. The comparing control unit 14 determines whether the rectified output exceeds the second threshold (step S201). If the rectified output exceeds the second threshold (Yes at step S201), the second narrowband filter (50 kHz) is selected (step S202). On the other hand, if the rectified output does not exceed the second threshold (Yes at step S202), it is further determined whether the rectified output exceeds the second threshold (step S203). If the rectified output exceeds the second threshold (Yes at step S203), the second narrowband filter (90 kHz) is selected (step 5204) . If the rectified output does not exceed the second threshold (No at step S203), the middleband filter (145 kHz) is selected first (step S205), and after a lapse of a predetermined time (preferably, between hundreds milliseconds and a few seconds), the wideband filter (180 kHz) is selected (step S206), and then the processing of the filter selecting flow is terminated.

In the embodiment, it is configured to include the filters of fixed bandwidths as described above. However, for example, when using a variable filter of which the filtering band can be continuously changed in a range, for example, from 50 kHz to 180 kHz, it is adequate that the filtering band of the variable filter can change in a filtering zone to be used during stereo reproduction in accordance with a curve that has a time constant higher than a predetermined value.

Furthermore, in the embodiment, processing of detecting interference is configured to be performed in an IF band. However, the above processing can be performed in each band of the RF band and the baseband, and not be particularly limited to the IF band.

The IF filter 4 shown in the embodiment can be either a digital filter or an analog filter. The bottom line is that the filter characteristic of the IF filter 4 is configured to be controlled to a desired filter characteristic based on output from the comparing control unit 14.

As explained above, according to the embodiment, the broadcast receiver includes the front end unit, the interference-signal control unit, the IF filter unit, the wave detector, and the audio-signal demodulating unit. The interference-signal control unit includes the interference-signal characteristic extracting unit and the comparing control unit. The audio-signal demodulating unit includes the multipass reduction circuit and the automatic reception control circuit. The front end unit converts a reception signal containing a desired wave signal that is a signal from a desired broadcast station into an IF signal. The interference-signal characteristic extracting unit extracts signal characteristics of a desired wave signal and an interference signal present adjacent to the desired wave signal based on the IF signal. The comparing control unit creates and outputs a certain control signal based on the signal characteristics extracted by the interference-signal characteristic extracting unit. The IF filter unit outputs an IF signal by filtering with an appropriate band-pass filter. The wave detector creates a baseband signal from output from the IF filter unit, and outputs the baseband signal. The multipass reduction circuit reduces a noise component in an audio signal included in the baseband signal, the noise component being caused by a multipass component in the desired wave signal. The automatic reception control circuit controls demodulation processing of an audio signal included in a reception signal in accordance with a reception condition of the reception signal. When shifting the demodulation processing performed by the audio-signal demodulating unit from monaural reproduction to wideband stereo reproduction based on the control signal output from the comparing control unit, the broadcast receiver is configured to set the filtering band of the filter unit intermediately to perform narrowband stereo reproduction processing based on a filter output from the band-pass filter of the middle bandwidth that has the middleband between the narrowband filter and the wideband filter. Accordingly, when controlling the band-pass filter in accordance with the reception level of an adjacent interference-signal, an uncomfortable feeling in terms of auditory sense can be reduced.

Furthermore, according to the embodiment, the automatic reception control circuit includes the separation circuit that continuously switches between stereo reproduction and monaural reproduction based on the reception level; and the comparing control unit is configured to operate either the multipass reduction circuit or the separation circuit when selecting a band-pass filter of the middle bandwidth or narrower; so that distortion of a desired wave signal and interference noise both of which may occur when switching the band can be reduced compatibly with reduction in an uncomfortable feeling in terms of auditory sense arising from switching.

Moreover, according to the embodiment, the band of the band-pass filter of the middle bandwidth is set within a range plus or minus 20% of the mid value between the band of the band-pass filter of the wide bandwidth for performing wideband stereo reproduction and the upper limit band of the band-pass filter for performing monaural reproduction, thereby satisfactorily coping with variations of average percent modulation in broadcast signals.

Moreover, according to the embodiment, the time for passing through the band-pass filter of the middle bandwidth is set within a range from hundreds milliseconds to a few seconds, thereby avoiding a sudden change caused by switching, reducing an uncomfortable feeling in terms of auditory sense, and smoothly shifting to wideband stereo reproduction.

## Claims

1. A broadcast receiver comprising:
a front end unit that converts a reception signal containing a desired wave signal that is a signal from a desired broadcast station into a signal at a predetermined frequency bandwidth;
an interference-signal control unit that includes an interference-signal characteristic extracting unit that extracts signal characteristics of the desired wave signal and an interference signal present adjacent to the desired wave signal based on an output signal from the front end unit, and a comparing control unit that creates and outputs an appropriate control signal based on the signal characteristics extracted by the interference-signal characteristic extracting unit;
a filter unit that filters the output signal from the front end unit with an appropriate band-pass filter, and outputs filtered signal;
a wave detector that creates a baseband signal from output from the filter unit, and outputs the baseband signal; and
an audio-signal demodulating unit that includes a multipass reduction circuit that reduces a noise component in an audio signal included in the baseband signal, the noise component being caused by a multipass component in the desired wave signal, and an automatic reception control circuit that controls demodulation processing of an audio signal included in a reception signal in accordance with a reception condition of the reception signal, wherein
when shifting filtering processing performed by the filter from a narrowband filter to a wideband filter based on a control signal output from the comparing control unit, a filtering band of the filter unit is set to perform intermediately narrowband stereo reproduction processing based on a filter output from a band-pass filter of a middle bandwidth that has a middleband between the narrowband filter and the wideband filter.

2. The broadcast receiver according to claim 1, wherein
the automatic reception control circuit includes a separation circuit that continuously switches between stereo reproduction and monaural reproduction based on a reception level, and
the comparing control unit is configured to operate one of the multipass reduction circuit and the separation circuit when selecting the band-pass filter of the middle bandwidth.

3. The broadcast receiver according to claim 1 or 2, wherein a band of the band-pass filter of the middle bandwidth is set to a mid value between a band of a band-pass filter of a wide bandwidth for performing wideband stereo reproduction and an upper limit band of a band-pass filter for performing monaural reproduction.

4. A filter control method applicable to a broadcast receiver that demodulates and reproduces a filter output filtered by a certain band-pass filter from a reception signal containing a desired wave signal that is a signal from a desired broadcast station, the filter control method comprising a middleband filter selecting step of selecting a band-pass filter of a middle bandwidth that has a middleband between a band-pass filter of a narrow bandwidth and a band-pass filter of a wide bandwidth as a filtering band of the certain band-pass filter, wherein the middleband filter selecting step is intermediately performed when reproduction of an audio signal is shifted from narrowband monaural reproduction to wideband stereo reproduction.
